Europäisches Patentamt

European Patent Office

Office européen des brevets

(11) Numéro de publication: **0 241 334**

**A1**

## (12) DEMANDE DE BREVET EUROPEEN

(21) Numéro de dépôt: **87400591.1**

(22) Date de dépôt: **17.03.87**

(51) Int. Cl.4: **A 44 B 19/16**

(30) Priorité: **17.03.86 FR 8603759**

(43) Date de publication de la demande:
**14.10.87 Bulletin 87/42**

(84) Etats contractants désignés:
**AT BE CH DE ES FR GB GR IT LI LU NL SE**

(71) Demandeur: **GEFREM, Société Anonyme dite:**
**Zone Industrielle Route de Sauvigny**
**F-89200 Avallon (FR)**

(72) Inventeur: **Janowski, Valery**
**4, Rue Auguste Perret**
**F-75013 Paris (FR)**

(74) Mandataire: **Nony, Michel et al**
**Cabinet NONY & CIE 29, rue Cambacérès**
**F-75008 Paris (FR)**

(54) Dispositif de fermeture à pression pour réunir les bords de nappes en matière plastique.

(57) L'invention est relative à un dispositif de fermeture à pression pour réunir les bords de nappes en matière plastique, comportant une bande profilée fixée, par soudure à chaud, au voisinage de chacun des bords à réunir, chacune des bandes comportant des moyens d'accrochage aptes à coopérer avec les moyens d'accrochage correspondants de la bande profilée fixée au voisinage de l'autre bord à réunir et un voile par lequel la bande profilée est fixée à la nappe correspondante.

Le voile (4a, 4b) de chaque bande profilée (2a, 2b) présente au moins une nervure longitudinale intermédiaire (5a, 5b) en saillie d'une de ses faces.

Fig. 2

EP 0 241 334 A1

Bundesdruckerei Berlin

**Description**

Dispositif de fermeture a pression pour réunir les bords de nappes en matière plastique.

La présente invention est relative à un dispositif du type fermeture à pression pour réunir les bords longitudinaux de deux nappes en matière plastique à assembler, ou les deux bords longitudinaux d'une nappe en matière plastique mise sous forme de gaine tubulaire.

On connaît depuis longtemps de nombreux types de fermetures à pression, destinées par exemple à des sacs ou sachets en feuilles de matière plastique, et comportant des moyens d'accrochage, généralement un ou plusieurs crochets coopérants, la fermeture et l'ouverture étant obtenues par engagement et respectivement dégagement, des crochets, généralement au moyen d'un curseur.

Dans certains cas, les moyens d'accrochage sont réalisés d'un seul tenant avec la feuille de matière plastique constituant le sac et dans d'autres cas, les moyens d'accrochage sont réalisés sur une bande profilée présentant un talon, en forme de voile, fixé généralement par soudure à chaud, sur la feuille de matière plastique correspondante. Dans certains cas, (par exemple GBA 642 636), le talon présente un bourrelet de renforcement à son extrémité.

On a cherché à utiliser de telles bandes profilées pour réaliser des fermetures par pression permettant de réunir des nappes de matière plastique ou de conformer sous forme de gaines tubulaires une nappe de matière plastique, par exemple en vue de réaliser une gaine d'isolation thermique de tuyauterie.

On fixe à cet effet, notamment par soudure à chaud, une bande profilée au voisinage de chacun des bords à réunir de la nappe ou, dans le cas où l'on cherche à réunir entre elles deux ou plusieurs nappes, le long des bords longitudinaux à réunir des nappes successives, la réunion des bords s'effectuant par engagement réciproque des moyens d'accrochage des bandes profilées.

L'expérience montre cependant que, dans le cas de nappes relativement épaisses et/ou réalisées en matière plastique cellulaire, l'on constate des déformations de surface du voile de la bande profilée soudée à chaud au voisinage du bord longitudinal de la nappe, ce qui se traduit par des plissements et une fixation peu solide de la bande profilée sur la nappe correspondante.

La présente invention se propose d'éviter par des moyens particulièrement simples et économiques de tels inconvénients.

La présente invention se caractérise par le fait que le voile de la bande profilée présente au moins une nervure longitudinale intermédiaire en saillie d'une face du voile réalisée entre les moyens d'accrochage et l'extrémité du voile.

Outre cette ou ces nervures intermédiaires, le voile peut comporter une nervure d'extrémité en saillie d'une de ses faces.

Dans une forme de réalisation avantageuse, la ou les nervures sont disposées sur la face du voile opposée à celle fixée sur la nappe.

Il est cependant envisageable dans le cadre de l'invention de fixer le voile sur la nappe correspondante avec la ou les nervures au contact de la nappe. Il est également envisageable de monter les bandes profilées à réunir l'une avec sa ou ses nervures en contact avec la surface de la nappe, l'autre avec sa ou ses nervures tournées à l'opposé. Cette dernière forme de réalisation permet d'utiliser la même bande profilée pour réaliser les deux parties de la fermeture et n'exige donc qu'une seule filière d'extrusion pour la fabrication de la bande.

Les expériences effectuées par la société déposante ont montré qu'avec la ou les nervures prévues sur le voile, on obtient lors de la soudure à chaud de la bande profilée sur la nappe correspondante une liaison de surface très solide, sans aucune déformation, ni plissement notables au niveau du voile.

On pense que ce bon résultat est dû au fait que les surépaisseurs matérialisées par les nervures longitudinales ont pour effet de mieux répartir la chaleur appliquée lors du soudage dans l'ensemble du voile.

Dans le but de mieux faire comprendre l'invention, on va maintenant en décrire à titre nullement limitatif, un exemple de réalisation en se référant au dessin annexé dans lequel :
- la figure 1 illustre une nappe en matière plastique munie à ses deux extrémités longitudinales de bandes profilées réalisant le dispositif de fermeture selon l'invention,
- la figure 2 illustre la nappe de la figure 1 mise en forme de gaine tubulaire.

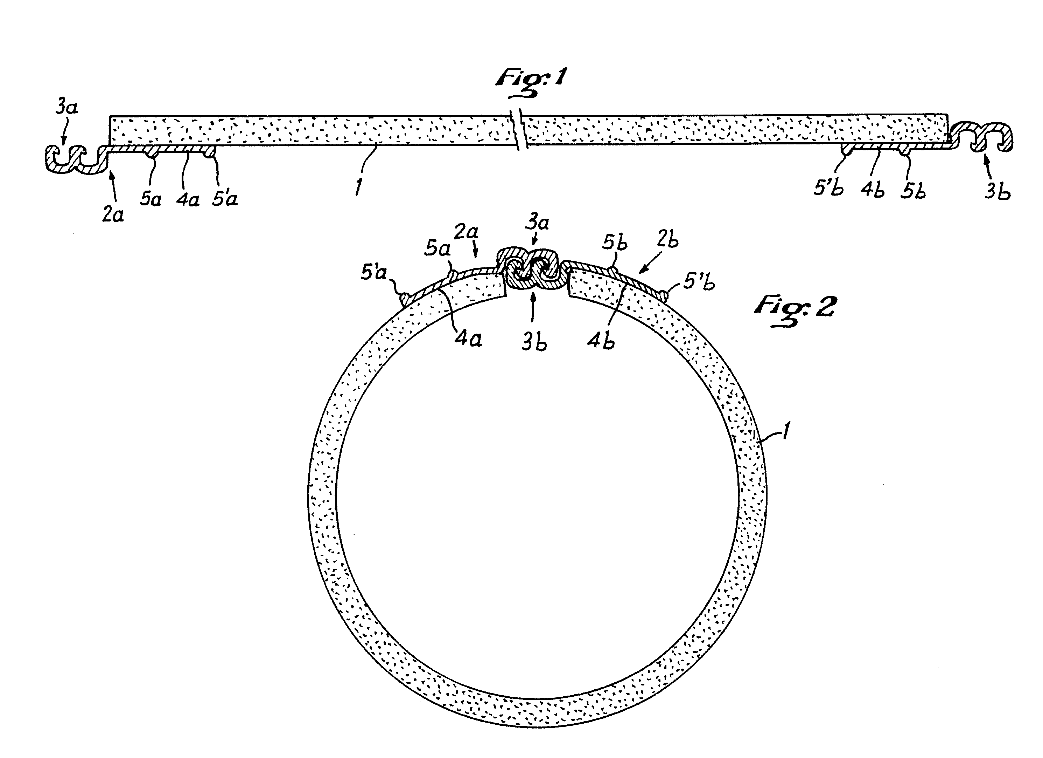

On a illustré sur les figures 1 et 2 une application possible du dispositif de fermeture selon l'invention pour réaliser par exemple des gaines tubulaires d'isolation thermique aptes à être mises en place autour de tuyauteries par exemple de chauffage ou de réfrigération. A cet effet, on fixe le long de chaque bord longitudinal d'une nappe en matière plastique 1, une bande profilée 2a et respectivement 2b, chacune des bandes profilées comportant des moyens d'accrochage 3a et respectivement 3b. Dans l'exemple illustré, chacun des moyens d'accrochage 3a et 3b est constitué de manière conventionnelle par un ensemble de trois nervures dont deux présentant des extrémités en forme de crochet, coopérant lors de l'application d'une pression, comme illustré à la figure 2, pour réaliser la solidarisation des bandes profilées 2a et 2b.

Chacune des bandes profilées présente pour sa fixation par soudure à chaud sur la nappe 1 un voile mince 4a, et respectivement 4b, comportant dans l'exemple illustré chacun une nervure longitudinale intermédiaire en saillie 5a, et respectivement 5b, ainsi qu'une nervure d'extrémité 5'a et respectivement 5'b.

Dans l'exemple illustré, les deux bandes profilées ne sont pas identiques de telle sorte que les nervures des deux bandes, lorsque ces dernières sont fixées à la nappe 1, se trouvent toutes tournées à l'opposé de la surface du voile fixée à la nappe. On aurait cependant pu remplacer la bande profilée 2b par une bande profilée identique à la bande 2a auquel cas les nervures de l'une des bandes auraient été au contact de la nappe.

Les bandes profilées pour la réalisation du dispositif de fermeture à pression peuvent être réalisées en tout matériau approprié, par exemple du polyéthylène, du polypropylène ou du PVC.

Dans l'exemple illustré, les voiles 4a et 4b des deux bandes profilées présentent une épaisseur de 3/10e de millimètre, chacune des nervures 5a, 5'a, 5b, 5'b présentant une épaisseur d'environ 1mm, et chacun des voiles présentant une largeur de 10 mm.

Bien que l'invention ait été décrite en liaison avec une application particulière, il est bien évident qu'elle n'y ait nullement limitée et que l'on peut par exemple la mettre en oeuvre pour la réunion de deux ou plusieurs nappes de protection, la réunion de parois de coffrage, la réunion de nappes constituant des éléments de housses, de bâches, etc...

## Revendications

1 - Dispositif de fermeture à pression pour réunir les bords de nappes en matière plastique, comportant une bande profilée fixée, par soudure à chaud, au voisinage de chacun des bords à réunir, chacune des bandes comportant des moyens d'accrochage aptes à coopérer avec les moyens d'accrochage correspondants de la bande profilée fixée au voisinage de l'autre bord à réunir et un voile par lequel la bande profilée est fixée à la nappe correspondante, caractérisé par le fait que le voile (4a, 4b) de chaque bande profilée (2a, 2b) présente au moins une nervure longitudinale intermédiaire (5a, 5b) en saillie d'une face du voile réalisée entre les moyens d'accrochage (3a, 3b) et l'extrémité du voile.

2 - Dispositif selon la revendication 1, caractérisé par le fait que chaque voile présente en outre une nervure longitudinale d'extrémité (5'a, 5'b) en saillie de la même face du voile que la ou lesdites nervures intermédiaires (5a, 5b).

3 - Dispositif selon l'une quelconque des revendications précédentes, caractérisé par le fait que la ou les nervures sont disposées sur la face du voile opposée à celle fixée à la nappe correspondante.

4 - Bande profilée pour la réalisation du dispositif selon l'une quelconque des revendications 1 à 3 comportant un voile et des moyens d'accrochage, caractérisée par le fait que le voile (4a, 4b) présente au moins une nervure longitudinale intermédiaire (5a, 5b) en saillie d'une de ses faces.

5 - Utilisation du dispositif selon l'une quelconque des revendications 1 à 3 pour la réalisation de gaines tubulaires d'isolation thermique.

*Fig.1*

3a

5a  4a  5'a

2a

1

5'b  4b  5b

3b

5'a

5a  2a

3a

5b  2b

5'b

4a

3b

4b

*Fig.2*

1

Office européen des brevets

**RAPPORT DE RECHERCHE EUROPEENNE**

Numero de la demande

EP 87 40 0591

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int Cl 4) |
|---|---|---|---|
| X | EP-A-0 025 656 (ROEDER)<br>* Figures * | 1-5 | A 44 B 19/16 |
| X | FR-A-1 202 080 (FREY GESELLSCHAFT FÜR INDUSTRIELLE FORSCUNGEN)<br>* Figure 5, référence 33 * | 1,3 | |
| A | EP-A-0 076 929 (DYNAMIT NOBEL)<br>* Figure 4 * | 1,5 | |
| D,A | GB-A- 692 636 (JASTER)<br>* Figures; page 2, lignes 21-27,80-88 * | 2,3 | |
| A | DE-C- 943 221 (JASTER)<br>* Figures; page 2, lignes 5-8,91-95 * | 2,3 | DOMAINES TECHNIQUES RECHERCHES (Int. Cl.4)<br><br>B 29 D<br>A 44 B |
| A | EP-A-0 155 612 (DOW CHEMICAL CO.)<br>* Figures, référence 24 * | | |
| A | GB-A- 659 970 (MADSEN)<br><br>* Figures * | | |
| A | FR-A-1 066 917 (HAGELTORN)<br><br>* Figures 1-10, référence 7 * | | |

Le présent rapport de recherche a été établi pour toutes les revendications

| Lieu de la recherche | Date d'achèvement de la recherche | Examinateur |
|---|---|---|
| LA HAYE | 16-06-1987 | CORDENIER J. |